# EUROPEAN PATENT APPLICATION

(11) **EP 4 851 126 A1**
(43) Date of publication of application: **09.12.2026**
(21) Application number: 26180934.7
(22) Date of filing: 26.05.2026
(51) Int. Cl.: C04B 41/00, C04B 41/45, C04B 41/52, C04B 41/87, C04B 41/89, C04B 111/00

(54) **METHOD FOR COATING AIRCRAFT BRAKE DISCS TO PREVENT OXIDATION BY DE-ICING AGENT**

(30) Priority: 30.05.2025 KR 20250070891
(71) Applicant: DACC Carbon Co., Ltd., Jeonju-si, Jeonbuk-do 54853 (KR)
(72) Inventor: CHO, Dae Hyun, 55307 Wanju-gun, Jeonbuk-do (KR); CHOI, Yeon Ho, 54892 Jeonju-si, Jeonbuk-do (KR); YOO, Tae Doo, 54868 Jeonju-si, Jeonbuk-do (KR)
(74) Representative: BCKIP Part mbB

(57) **Abstract**

According to the present disclosure, a double coating configured by a primary inner coating configured by aluminum phosphate (Al(H₂PO₄)₃), titanium diboride (TiB₂), boron carbide (B₄C), and silicon carbide (SiC) and a secondary outer coating configured by colloidal silica, borosilicate glass, and titanium diboride (TiB₂) is applied to a non-friction surface of an aircraft brake disc formed of a carbon-carbon composite, thereby providing oxidation resistance performance and durability optimized for de-icing environments.

## Description

### CROSS-REFERENCE TO RELATED APPLICATIONS

This application claims the priority of Korean Patent Application No. 2025-0070891 filed on MAY 30, 2025, in the Korean Intellectual Property Office.

### BACKGROUND

### Field

The present disclosure relates to a method for coating an aircraft brake disc to prevent oxidation by de-icing agent.

### Description of the Related Art

A temperature of an aircraft brake disc rises to 1000°C or higher due to frictional heat during aircraft landing so that the aircraft brake disc is manufactured by a carbon-carbon composite to maintain friction force and mechanical strength even at high temperatures.

However, the carbon-carbon composite has problems in that severe oxidation occurs in the atmosphere at the temperature of 400°C or higher, which causes a significant decrease in the weight of the composite and consequently a reduction in strength.

Specifically, if the aircraft is exposed to the de-icing agent which is used on the ground after landing, the oxidation of the carbon-carbon composite is further accelerated. The de-icing agent generally includes salts, such as potassium acetate or potassium formate and these materials contain moisture or have a property of absorbing moisture.

Accordingly, if a brake disc surface which is in a high-temperature state due to the frictional heat during the aircraft landing and moisture included in the de-icing agent meet, the moisture reacts with carbon to cause oxidation. Further, alkali metal ions, such as sodium (Na⁺) and potassium (K⁺), included in the de-icing agent act as oxidation catalysts to increase the oxidation rate of carbon materials at high temperatures.

In order to solve this problem, anti-oxidation coating is performed on the carbon brake disc. A carbon brake disc coating technology disclosed in Korean Registered Patent No. 10-0533480 solves the high-temperature oxidation issue by using boron or phosphoric acid-based composite coating. However, according to this technology, there are limitations in that a coating layer is peeled off due to reaction with alkali metal ions included in the de-icing agent or is absorbed in a water-soluble de-icing agent due to a lack of water resistance to be damaged.

As another technology, there is a metallic silicon-based anti-oxidation coating method which melts metallic silicon to be adhered onto the disc surface, thereby firmly bonding a silicon carbide (SiC) anti-oxidation coating film. However, according to this method, a process for removing a residual metallic silicon on the coating film is necessary and oxygen permeation is caused due to open pores between the coating films so that the high-temperature oxidation is not completely blocked.

Consequently, the related art is somewhat effective against high-temperature oxidation itself, but it fails to solve the difficulties in maintaining the durability and performance of aircraft brake discs due to insufficient water resistance, coating peeling, and accelerated oxidation caused by moisture and chemical components (especially alkali metal ions) of de-icing agents repeatedly exposed in the aircraft operating environment.

### [Related Art Document]

### [Patent Document]

Korean Registered Patent No. 10-0533480
Korean Registered Patent No. 10-1530915

### SUMMARY

An object of the present disclosure is to provide a method for coating an aircraft brake disc to prevent oxidation due to a de-icing agent.

In order to achieve the above-described objects, a method for coating an aircraft brake disc to prevent oxidation due to a de-icing agent includes:
a first step of applying a primary inner coating composition including aluminum phosphate (Al(H₂PO₄)₃), titanium diboride (TiB₂), boron carbide (B₄C), and silicon carbide (SiC) to a non-friction surface of an aircraft brake disc formed of a carbon-carbon composite;
a second step of forming a primary inner coating layer by drying and thermally treating the aircraft brake disc applied with the primary inner coating composition;
a third step of applying a secondary outer coating composition including colloidal silica, borosilicate glass, and titanium diboride (TiB₂) on the primary inner coating layer; and
a fourth step of forming a secondary outer coating layer by drying and thermally treating the aircraft brake disc applied with the secondary outer coating composition.

Further, the object is achieved by a method for coating an aircraft brake disc to prevent oxidation due to a de-icing agent including:
a first step of applying a primary inner coating composition including aluminum phosphate (Al(H₂PO₄)₃), titanium diboride (TiB₂), and boron carbide (B₄C) to a non-friction surface of an aircraft brake disc formed of a carbon-carbon composite;
a second step of forming a primary inner coating layer by drying and thermally treating the aircraft brake disc applied with the primary inner coating composition;
a third step of applying a secondary outer coating composition including colloidal silica, borosilicate glass, titanium diboride (TiB₂), and silicon carbide (SiC) on the primary inner coating layer; and
a fourth step of forming a secondary outer coating layer by drying and thermally treating the aircraft brake disc applied with the secondary outer coating composition.

Further, the object is achieved by a method for coating an aircraft brake disc to prevent oxidation due to a de-icing agent including:
a first step of applying a primary inner coating composition including aluminum phosphate (Al(H₂PO₄)₃), titanium diboride (TiB₂), boron carbide (B₄C), and silicon carbide (SiC) to a non-friction surface of an aircraft brake disc formed of a carbon-carbon composite;
a second step of forming a primary inner coating layer by drying and thermally treating the aircraft brake disc applied with the primary inner coating composition;
a third step of applying a secondary outer coating composition including colloidal silica, borosilicate glass, titanium diboride (TiB₂), and silicon carbide (SiC) on the primary inner coating layer; and
a fourth step of forming a secondary outer coating layer by drying and thermally treating the aircraft brake disc applied with the secondary outer coating composition.

According to the present disclosure, double coating configured by a primary inner coating configured by aluminum phosphate (Al(H₂PO₄)₃), titanium diboride (TiB₂), boron carbide (B₄C), and silicon carbide (SiC) and a secondary outer coating configured by colloidal silica, borosilicate glass, and titanium diboride (TiB₂) is applied to a non-friction surface of an aircraft brake disc formed of a carbon-carbon composite, thereby providing oxidation resistance performance and durability optimized for de-icing agent environments.

The aluminum phosphate (Al(H₂PO₄)₃) of the primary inner coating layer improves an interfacial adhesiveness between the disc surface and the coating layer to suppress the coating layer peel-off and aluminum phosphate (Al(H₂PO₄)₃), titanium diboride (TiB₂), boron carbide (B₄C), and silicon carbide (SiC) enhance oxidation resistance and durability of the brake disc.

The colloidal silica, borosilicate glass, and titanium diboride (TiB₂) of the secondary outer coating layer provide friction resistance and water resistance from the external environment to suppress the damage of the brake disc due to chemical components of the de-icing agent and specifically, the colloidal silica and borosilicate glass are softened at the high temperature to be filled in the crack caused by the external environment to be self-cured.

If silicon carbide (SiC) is included in the primary inner coating composition, a basic structure stability of the coating layer is ensured, pores or cracks which may be caused during high-temperature thermal treatment may be minimized, and the interfacial adhesiveness between the coating layer and the composite is improved to suppress the peeling-off or detachment. In the meantime, silicon carbide (SiC) may be included only in the secondary outer coating, or included in both the primary inner coating and the secondary outer coating.

If silicon carbide (SiC) is included in the secondary outer coating composition, wear resistance and impact resistance of the secondary outer coating layer which is directly exposed to the high-temperature repetition cycle or the external friction environment are improved.

If silicon carbide (SiC) is included in both the primary inner coating composition and the secondary outer coating composition, silicon carbide (SiC) is dispersed on the entire coating layer so that inner structure stabilization and external protection effect may be simultaneously provided.

According to the present disclosure, thermal stability and oxidation resistance of the coating are improved by drying and heat-treatment after applying the coating composition, the high durability is enhanced, and these effects may be achieved by heat treatment below 1000°C.

The effects according to the present disclosure are not limited to the contents exemplified above, and more various effects are included in the present specification.

### BRIEF DESCRIPTION OF THE DRAWINGS

The above and other aspects, features and other advantages of the present disclosure will be more clearly understood from the following detailed description taken in conjunction with the accompanying drawings, in which:
FIG. 1 is a flowchart illustrating a method for coating an aircraft brake disc to prevent oxidation due to a de-icing agent according to a first exemplary embodiment of the present disclosure;
FIG. 2 is a table illustrating drying and thermal treatment conditions of a primary inner coating layer and a secondary outer coating layer;
FIG. 3 is a flowchart illustrating a method for coating an aircraft brake disc to prevent oxidation due to a de-icing agent according to a second exemplary embodiment of the present disclosure; and
FIG. 4 is a flowchart illustrating a method for coating an aircraft brake disc to prevent oxidation due to a de-icing agent according to a third exemplary embodiment of the present disclosure.

### DETAILED DESCRIPTION OF THE EMBODIMENT

Hereinafter, a method for coating an aircraft brake disc to prevent oxidation due to a de-icing agent according to a first exemplary embodiment of the present disclosure will be described.

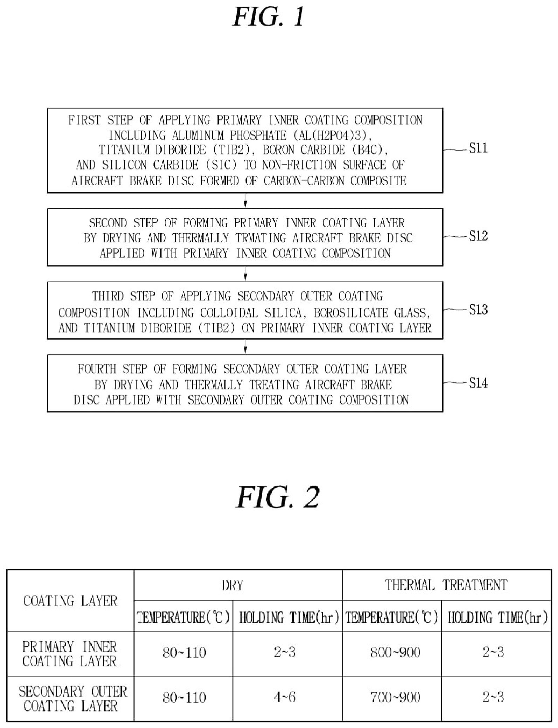

As illustrated in FIG. 1, the method for coating an aircraft brake disc to prevent oxidation due to a de-icing agent according to a first exemplary embodiment of the present disclosure includes:
a first step S11 of applying a primary inner coating composition including aluminum phosphate (Al(H₂PO₄)₃), titanium diboride (TiB₂), boron carbide (B₄C), and silicon carbide (SiC) to a non-friction surface of an aircraft brake disc formed of a carbon-carbon composite;
a second step S12 of forming a primary inner coating layer by drying and thermally treating the aircraft brake disc applied with the primary inner coating composition;
a third step S13 of applying a secondary outer coating composition including colloidal silica, borosilicate glass, and titanium diboride (TiB₂) on the primary inner coating layer; and
a fourth step S14 of forming a secondary outer coating layer by drying and thermally treating the aircraft brake disc applied with the secondary outer coating composition.

Hereinafter, the first step S11 will be described.

On the non-friction surface of the aircraft brake disc, oxidation is caused due to the high temperature and the chemical reaction of oxygen in the air and the de-icing agent.

Accordingly, the non-friction surface of the aircraft brake disc formed of the carbon-carbon composite is treated in advance with metal phosphate (AlPO₄) to fill the pores and increase the oxidation resistance.

To this end, a primary inner coating composition based on metal phosphate is applied on the non-friction surface of the aircraft brake disc formed of the carbon-carbon composite. The primary inner coating composition includes aluminum phosphate (Al(H₂PO₄)₃) as metal phosphate and further includes titanium diboride (TiB₂), boron carbide (B₄C), and silicon carbide (SiC).

Aluminum phosphate (Al(H₂PO₄)₃) permeates in micropores of the surface of the aircraft brake disc to fill the pores, thereby blocking inner permeation of oxide materials such as oxygen or moisture and improving the interfacial adhesiveness with low thermal expansion.

Titanium diboride (TiB₂) is a high-temperature ceramic with excellent wear resistance and oxidation resistance and is coupled with metal phosphate components to enhance the durability of the aircraft brake disc. Further, TiO₂ (900 to 1200°C) generated during the thermal treatment of 800°C or higher blocks high-temperature oxygen diffusion and B₂O₃ (700 to 900°C) forms a glassy protective layer to cure microcracks or prevent the oxidation.

Boron carbide (B₄C) generates B₂O₃ at the high temperature (700 to 900°C) to enhance an oxygen blocking function and impart heat resistance and wear resistance. Accordingly, a synergistic effect with TiB₂ is exerted to form a complex oxidation-resistant function.

Silicon carbide (SiC) is a ceramic which is stable even at a high temperature to improve resistance against the oxidation environment and suppress the damage of the coating layer due to friction or thermal shock. If silicon carbide (SiC) is included in the primary inner coating composition, a structural support of a base layer in contact with a disc substrate is enhanced to alleviate shrinkage or stress concentration of the coating layer during thermal treatment and the internal micropores are effectively filled to serve as a basic oxidation barrier layer by effectively filling internal micropores. Further, the thermal stability of the primary inner coating layer is increased to enhance the interfacial adhesiveness with the secondary outer coating layer and suppress the coating layer peel-off or interfacial damage.

In the meantime, the primary inner coating composition may include surfynol which is a non-ionic surfactant. Surfynol induces uniform coating on the surface of the aircraft brake disc to increase the adhesiveness of the coating layer.

Consequently, the primary inner coating performed in the first step S11 seals structural micropores of the aircraft brake disc and forms a defensive base layer against the high-temperature oxidation to play a key role in stably protecting the lifespan and performance of the brake disc from external environmental factors, such as de-icing agents and high-temperature oxygen.

Hereinafter, the second step S12 will be described.

The second step S12 is a step of forming an inner coating layer by drying and thermally treating the primary inner coating composition applied in the first step S11 and stably implements a solid coating layer having an anti-oxidation function on the surface.

As illustrated in FIG. 2, first, the applied primary inner coating composition is dried for approximately two to three hours at the temperature of approximately 80°C to 110°C. The drying process serves to remove the moisture from the composition and help the composition to adhere to the disc surface. Specifically, during this process, the phosphate component partially adheres and fills the pores.

Next, the dried aircraft brake disc is thermally treated for approximately two to three hours at approximately 800°C to 900°C. The applied primary inner coating composition is cured through thermal treatment to form a primary inner coating layer.

During the thermal treatment process, each component is chemically activated and a substantial oxidation-resistant layer is formed through thermal decomposition or oxidation reaction. Further, during this thermal treatment process, a porosity of the entire coating layer is reduced, interlayer adhesiveness is enhanced, and adhesiveness of the secondary outer coating composition applied thereafter is improved.

Hereinafter, the third step S13 will be described.

The third step s13 is a step of applying the secondary outer coating composition on the primary inner coating layer formed in step S12 and forms an external protective barrier film to provide long-term protection for aircraft brake discs against oxidation and chemical attacks that may occur in high-temperature and humid environments.

The secondary outer coating composition is formed of a composition of a boron compound and a silicon compound, and borosilicate glass to form composite coating. Specifically, the secondary outer coating composition is configured by colloidal silica, borosilicate glass, titanium diboride (TiB₂), and silicon carbide (SiC).

The colloidal silica is formed by nano-sized SiO₂ particles stably dispersed in an aqueous solution and is softened at a high temperature (1200 to 1400°C) and provides a function of self-curing microcracks which are generated by thermal shock or repetitive braking operation. Accordingly, the colloidal silica is filled in cracks caused by the external environment to maintain the continuity and airtightness of the entire coating layer and block oxygen diffusion.

The borosilicate glass starts to soften at a relatively low temperature of 600 to 700°C. Borosilicate glass is softened first in a temperature rising section which is generated during an initial thermal treatment or operation, to contribute to filling of initial cracks and formation of a protective film. The self-curing operation thereof is possible even at a temperature lower than that of the colloidal silica, enabling the crack compensation function to be performed under multi-stage temperature conditions and increasing the durability of the coating layer.

Titanium diboride (TiB₂) forms TiO₂ and B₂O₃, as described above, to form an oxidation barrier film on the surface of the coating layer. Accordingly, titanium diboride significantly improves resistance against the high-temperature oxidation through a composite operation with borosilicate glass and silica and reinforces a mechanical strength of the coating layer, simultaneously.

Hereinafter, the fourth step S14 will be described.

The fourth step S14 is a step of completing an external protective layer by drying and thermally treating the secondary outer coating composition applied in the third step S13 and forms a final barrier film of the entire double coating system which comes into direct contact with the external environment.

As illustrated in FIG. 2, first, the applied secondary outer coating composition is dried for approximately four to six hours at the temperature of approximately 80°C to 110°C. Through this drying process, moisture and organic components in the composition are stably removed to suppress formation of pores, peel-off, and thermal cracks which may be caused during the thermal treatment and enable the uniform film formation on the surface.

After completing the drying, the aircraft brake disc is thermally treated for approximately two to three hours in the temperature range of approximately 700°C to 900°C. Through the thermal treatment, the applied secondary outer coating composition is cured to form a secondary outer coating layer. Unlike the primary inner coating layer, the secondary outer coating layer serves as a protective film which is in direct contact with the external environment, and in particular, protects effectively the carbon composite disc from permeation of alkali metal ions (Na⁺ or K⁺) included in the de-icing agent, moisture diffusion, and high-temperature oxidation atmosphere. Further, the self-curing ability thereof is provided by utilizing the characteristic of the glassy material (borosilicate glass) so that the microcracks caused by thermal shock or mechanical stress are naturally filled and recombined over a long period to ensure the long-term reliability of the brake disc and stability under the repeated use conditions.

Consequently, the secondary outer coating layer completed through the fourth step S14 comprehensively performs oxidation blocking, moisture blocking, self-curing, wear-resistance reinforcement functions in the entire double coating structure to improve the lift-span and the performance of the aircraft brake disc in the high-temperature environment.

### Example of primary inner coating composition and secondary outer coating composition (see Table 1)

The primary inner coating composition and the secondary outer coating composition according to a first exemplary embodiment are configured as follows. 0.2 mol silicon carbide (SiC) with a particle size of 1 µm is added only to the primary inner coating composition.

**[Table 1]**

| Composition | Component | Content (wt%) |
|---|---|---|
| Primary inner coating composition | (Al(H₂PO₄)₃ solution | 62.0 |
| | TiB₂ | 10.2 |
| | B₄C | 15.1 |
| | Distilled water | 4.4 |
| | Surfynol | 0.9 |
| | SiC 1 µm | 7.4 |
| Secondary outer coating composition | Colloidal silica | 38.0 |
| | Borosilicate glass | 13.0 |
| | TiB₂ | 49.0 |

Hereinafter, a method for coating an aircraft brake disc to prevent oxidation due to a de-icing agent according to a second exemplary embodiment of the present disclosure.

In the first exemplary embodiment, silicon carbide (SiC) is included only in the primary inner coating composition, but in the second exemplary embodiment, silicon carbide (SiC) is included only in the secondary outer coating composition. Except for this, the second exemplary embodiment is the same as the first exemplary embodiment.

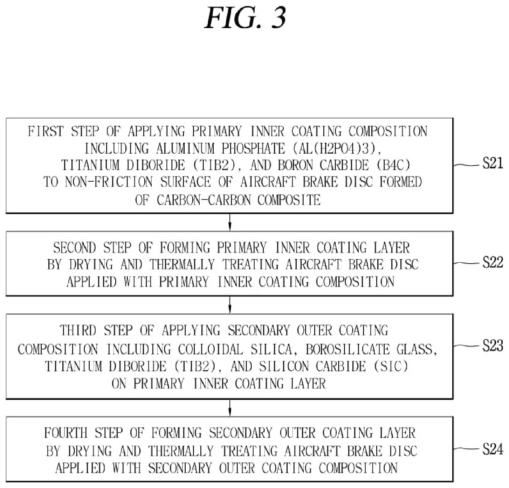

As illustrated in FIG. 3, the method for coating an aircraft brake disc to prevent oxidation due to a de-icing agent according to the second exemplary embodiment of the present disclosure includes:
a first step S21 of applying a primary inner coating composition including aluminum phosphate (Al(H₂PO₄)₃), titanium diboride (TiB₂), and boron carbide (B₄C) to a non-friction surface of an aircraft brake disc formed of a carbon-carbon composite;
a second step S22 of forming a primary inner coating layer by drying and thermally treating the aircraft brake disc applied with the primary inner coating composition;
a third step S23 of applying a secondary outer coating composition including colloidal silica, borosilicate glass, titanium diboride (TiB₂), and silicon carbide (SiC) on the primary inner coating layer; and
a fourth step S24 of forming a secondary outer coating layer by drying and thermally treating the aircraft brake disc applied with the secondary outer coating composition.

If silicon carbide (SiC) is included in the secondary outer coating composition, wear resistance and impact resistance of the secondary outer coating layer which is directly exposed to the high-temperature repetition cycle or the external friction environment are improved. Further, when borosilicate glass and colloidal silica which are glassy materials are softened during the thermal treatment or usage, silicon carbide (SiC) serves as a skeletal reinforcement to support the glassy protective film so as not to collapse, and maintains the long-term stability of the secondary outer coating layer.

### Example of primary inner coating composition and secondary outer coating composition (see Table 2)

The primary inner coating composition and the secondary outer coating composition according to the second exemplary embodiment are configured as follows. 0.2 mol silicon carbide (SiC) with a particle size of 1 µm is added only to the secondary outer coating composition.

**[Table 2]**

| Composition | Component | Content (wt%) |
|---|---|---|
| Primary inner coating composition | (Al(H₂PO₄)₃ solution | 67.0 |
| | TiB₂ | 11.0 |
| | B₄C | 16.3 |
| | Distilled water | 4.7 |
| | Surfynol | 1.0 |
| Secondary outer coating composition | Colloidal silica | 35.2 |
| | Borosilicate glass | 12.0 |
| | TiB₂ | 45.4 |
| | SiC 1 µm | 7.4 |

Hereinafter, a method for coating an aircraft brake disc to prevent oxidation due to a de-icing agent according to a third exemplary embodiment of the present disclosure.

In the first exemplary embodiment, silicon carbide (SiC) is included only in the primary inner coating composition, but in the third exemplary embodiment, silicon carbide (SiC) is included in both the primary inner coating composition and the secondary outer coating composition. Except for this, the third exemplary embodiment is the same as the first exemplary embodiment.

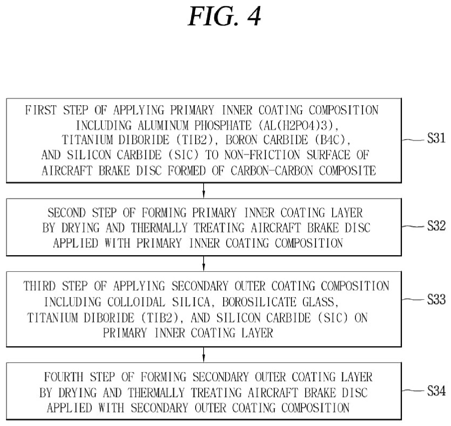

As illustrated in FIG. 4, the method for coating an aircraft brake disc to prevent oxidation due to a de-icing agent according to the third exemplary embodiment of the present disclosure includes:
a first step S31 of applying a primary inner coating composition including aluminum phosphate (Al(H₂PO₄)₃), titanium diboride (TiB₂), boron carbide (B₄C), and silicon carbide (SiC) to a non-friction surface of an aircraft brake disc formed of a carbon-carbon composite;
a second step S32 of forming a primary inner coating layer by drying and thermally treating the aircraft brake disc applied with the primary inner coating composition;
a third step S33 of applying a secondary outer coating composition including colloidal silica, borosilicate glass, titanium diboride (TiB₂), and silicon carbide (SiC) on the primary inner coating layer; and
a fourth step S34 of forming a secondary outer coating layer by drying and thermally treating the aircraft brake disc applied with the secondary outer coating composition.

If silicon carbide (SiC) is included in both the primary inner coating composition and the secondary outer coating composition, silicon carbide (SiC) is dispersed on the entire coating layer so that inner structure stabilization and external protection effect may be simultaneously provided. In this case, thermal stress distribution is uniformly spread between layers and peel-off due to the external physical impact or internal thermal expansion difference may be minimized. Further, a heat conduction path is formed on the entire coating layer to suppress localized overheating and maximize integrity and reliability of the coating layer under the repeated use conditions.

### Example of primary inner coating composition and secondary outer coating composition (see Table 3)

The primary inner coating composition and the secondary outer coating composition according to the third exemplary embodiment are configured as follows. 0.2 mol silicon carbide (SiC) with a particle size of 1 µm is added to both the primary inner coating composition and the secondary outer coating composition.

**[Table 3]**

| Composition | Component | Content (wt%) |
|---|---|---|
| Primary inner coating composition | (Al(H₂PO₄)₃ solution | 62.0 |
| | TiB₂ | 10.2 |
| | B₄C | 15.1 |
| | Distilled water | 4.4 |
| | Surfynol | 0.9 |
| | SiC 1 µm | 7.4 |
| Secondary outer coating composition | Colloidal silica | 35.2 |
| | Borosilicate glass | 12.0 |
| | TiB₂ | 45.4 |
| | SiC 1 µm | 7.4 |

In the meantime, the method for coating an aircraft brake disc to prevent oxidation due to a de-icing agent according to the present disclosure is applicable not only to the aircraft, but also to brake disc used under other high-temperature and high-grade environments.

## Claims

1. A method for coating an aircraft brake disc to prevent oxidation due to a de-icing agent, comprising:
a first step of applying a primary inner coating composition including aluminum phosphate (Al(H₂PO₄)₃), titanium diboride (TiB₂), boron carbide (B4C), and silicon carbide (SiC) to a non-friction surface of the aircraft brake disc formed of a carbon-carbon composite;
a second step of forming a primary inner coating layer by drying and thermally treating the aircraft brake disc applied with the primary inner coating composition;
a third step of applying a secondary outer coating composition including colloidal silica, borosilicate glass, and titanium diboride (TiB₂) on the primary inner coating layer; and
a fourth step of forming a secondary outer coating layer by drying and thermally treating the aircraft brake disc applied with the secondary outer coating composition.

2. A method for coating an aircraft brake disc to prevent oxidation due to a de-icing agent, comprising:
a first step of applying a primary inner coating composition including aluminum phosphate (Al(H₂PO₄)₃), titanium diboride (TiB₂), and boron carbide (B₄C) to a non-friction surface of the aircraft brake disc formed of a carbon-carbon composite;
a second step of forming a primary inner coating layer by drying and thermally treating the aircraft brake disc applied with the primary inner coating composition;
a third step of applying a secondary outer coating composition including colloidal silica, borosilicate glass, titanium diboride (TiB₂), and silicon carbide (SiC) on the primary inner coating layer; and
a fourth step of forming a secondary outer coating layer by drying and thermally treating the aircraft brake disc applied with the secondary outer coating composition.

3. A method for coating an aircraft brake disc to prevent oxidation due to a de-icing agent, comprising:
a first step of applying a primary inner coating composition including aluminum phosphate (Al(H₂PO₄)₃), titanium diboride (TiB₂), boron carbide (B₄C), and silicon carbide (SiC) to a non-friction surface of the aircraft brake disc formed of a carbon-carbon composite;
a second step of forming a primary inner coating layer by drying and thermally treating the aircraft brake disc applied with the primary inner coating composition;
a third step of applying a secondary outer coating composition including colloidal silica, borosilicate glass, titanium diboride (TiB₂), and silicon carbide (SiC) on the primary inner coating layer; and
a fourth step of forming a secondary outer coating layer by drying and thermally treating the aircraft brake disc applied with the secondary outer coating composition.

4. The method for coating an aircraft brake disc to prevent oxidation due to a de-icing agent according to any one of claims 1 to 3, wherein in the second step, a drying condition of the aircraft brake disc applied with the primary inner coating composition has a temperature of 80 to 110°C and a holding time of 2 to 3 hours and a thermal treatment condition has a temperature of 800 to 900°C and a holding time of 2 to 3 hours.

5. The method for coating an aircraft brake disc to prevent oxidation due to a de-icing agent according to any one of claims 1 to 3, wherein in the fourth step, a drying condition of the aircraft brake disc applied with the secondary outer coating composition has a temperature of 80 to 110°C and a holding time of 4 to 6 hours and a thermal treatment condition has a temperature of 700 to 900°C and a holding time of 2 to 3 hours.
